# EUROPÄISCHE PATENTANMELDUNG

(11) **EP 0 972 443 A2**
(43) Veröffentlichungstag der Anmeldung: **19.01.2000**
(21) Anmeldenummer: 99112524.6
(22) Anmeldetag: 01.07.1999
(51) Int. Cl.: A01K 5/00

(54) **Kettenförderer**

(30) Priorität: 08.07.1998 DE 19830381
(71) Anmelder: von der Heide Maschinenbau GmbH & Co. KG, 49479 Ibbenbüren 2 - Laggenbeck (DE)
(72) Erfinder: von der Heide, Hans, 49479 Ibbenbüren (DE)
(74) Vertreter: Schulze Horn & Partner

(57) **Zusammenfassung**

Die Erfindung betrifft einen Kettenförderer (1) mit einer endlosen, zwischen zwei Förderrädern (10) umlaufenden Förderkette (2), die aus gelenkig miteinander verbundenen Kettengliedern (3, 4, 5) zusammengesetzt ist, wobei an einem Teil der Kettenglieder (3) in der Kettenumlaufebene von der Kette (2) nach außen weisende Förderleisten (30) vorgesehen sind.

Der Kettenförderer (1) gemäß Erfindung ist dadurch gekennzeichnet, daß jedes Kettenglied (3), an dem eine Förderleiste (30) vorgesehen ist, einen entgegen der Ketten-Arbeitsrichtung (20) weisenden, bis etwa zur Mitte des jeweils nachfolgenden Kettengliedes (4, 5) reichenden Stützfortsatz (33) aufweist, der in geradlinig verlaufenden Kettenabschnitten am jeweils nachfolgenden Kettenglied (4, 5) sich außenseitig abstützend anliegt.

## Beschreibung

Die vorliegende Erfindung betrifft einen Kettenförderer mit einer endlosen, zwischen zwei Förderrädern umlaufenden Förderkette, die aus gelenkig miteinander verbundenen Kettengliedern zusammengesetzt ist, wobei an einem Teil der Kettenglieder in der Kettenumlaufebene von der Kette nach außen weisende Förderleisten vorgesehen sind.

In der älteren, nicht vorveröffentlichten Patentanmeldung DE 197 25 888 ist ein Kettenförderer der eingangs genannten Art im Zusammenhang mit einem Misch- und Verteilwagen für Futter beschrieben. Dieser Kettenförderer ist zwar funktionsfähig, jedoch treten nachteilig innerhalb der Förderkette hohe Belastungen auf, die durch Hebelmomente hervorgerufen werden, die von den Förderleisten, die ein zu förderndes Gut transportieren müssen, in die Förderkette eingeleitet werden. Zur Sicherstellung eines zuverlässigen Betriebes muß deshalb die Förderkette sehr stabil und damit schwer ausgeführt werden.

In der ebenfalls älteren, nicht vorveröffentlichten Patentanmeldung DE 198 06 656 ist ein weiterentwickelter Kettenförderer beschrieben, bei dem die einzelnen Förderleisten an ihrer Rückseite eine Diagonalstütze zur Aufnahme und Ableitung der Hebelkräfte aufweisen. Diese Diagonalstützen liegen in geradlinig verlaufenden Förderkettenabschnitten mit ihrem freien Fußende abstützend am Anbringungspunkt der nachlaufenden Förderleiste an der Förderkette an. Als nachteilig wird bei diesem Kettenförderer angesehen, daß die Anbringung der Diagonalstützen sehr aufwendig ist und daß sie einen erheblichen Einbauraum beanspruchen. Außerdem haben die Diagonalstützen im Betrieb den Nachteil, daß sie Teile des zu fördernden Gutes durch ihren schrägen Verlauf in Richtung zur Förderkette bewegen, was zu Störungen im Betrieb des Kettenförderers durch in der Kette eingeklemmtes Fördergut führen kann.

Für die vorliegende Erfindung stellt sich deshalb die Aufgabe, einen Kettenförderer der eingangs genannten Art zu schaffen, der die dargelegten Nachteile vermeidet und bei dem insbesondere die an den Förderleisten auftretenden Hebelkräfte schadlos in die Förderkette eingeleitet werden, ohne daß die Förderkette besonders stark und schwer ausgeführt sein muß. Außerdem soll der Kettenförderer von einfacher und platzsparender Konstruktion sein und einen zuverlässigen und störungsarmen Betrieb gewährleisten.

Die Lösung dieser Aufgabe gelingt erfindungsgemäß durch einen Kettenförderer der eingangs genannten Art, der dadurch gekennzeichnet ist, daß jedes Kettenglied, an dem eine Förderleiste vorgesehen ist, einen entgegen der Ketten-Arbeitsrichtung weisenden, bis etwa zur Mitte des jeweils nachfolgenden Kettengliedes reichenden Stützfortsatz aufweist, der in geradlinig verlaufenden Kettenabschnitten am jeweils nachfolgenden Kettenglied sich außenseitig abstützend anliegt.

Erfindungswesentlich erfolgt bei dem neuen Kettenförderer die Einleitung der an den Förderleisten angreifenden Hebelkräfte im Bereich zweier unmittelbar benachbarter Kettenglieder. Hierdurch wird eine sehr kompakte und auch relativ leichte Bauweise der Förderkette ermöglicht. Platzraubende Diagonalstützen sind nicht mehr erforderlich, wodurch auch die durch diese verursachte Eintragung von Fördergut in den Bereich der Förderkette entfällt. In ihren geradlinig verlaufenden Abschnitten zwischen den Förderrädern verhält sich die Förderkette gegenüber den von den Förderleisten eingeleiteten Hebelkräften annähernd wie ein starres Gebilde; gleichzeitig wird aber die Umlenkung der Förderkette um die Förderräder herum durch die Stützfortsätze nicht behindert, da in einer Umlenkrichtung, die der Umlenkrichtung an den Förderrädern entspricht, die Förderkette frei beweglich bleibt. Lediglich in der anderen Umlenkrichtung wirken die Stützfortsätze als Sperre, was aber im Hinblick auf eine Umlenkung kein Nachteil ist, weil bei Kettenförderern der hier in Rede stehenden Art lediglich eine Umlenkrichtung der Kette nötig ist.

Weiterhin ist bevorzugt vorgesehen, daß die Förderkette als Rollenkette mit je Kettenglied zwei oder mehr plattenförmigen Kettengliedern ausgeführt ist und daß bei den Kettengliedern mit Förderleiste diese mit mindestens einem der zugehörigen Kettengliedteile einstückig oder fest verbunden ist. Bei einer so ausgeführten Förderkette können teilweise gängige Kettenbauteile eingesetzt werden, was die Herstellung der Förderkette vereinfacht und kostengünstig hält. Gleichzeitig besteht die einfache Möglichkeit, die Förderleisten einstückig mit den zugehörigen Kettengliedern auszuführen oder mit diesen fest zu verbinden, beispielsweise zu verschrauben oder zu vernieten oder zu verschweißen. Weiterhin können bei dieser Förderkette herkömmliche, als entsprechend bemaßte Ritzel ausgeführte Förderräder eingesetzt werden, die ebenfalls gängige Bauteile sind und somit zu einer kostengünstigen Herstellbarkeit beitragen.

Um ausreichend Platz für die Anordnung und Anbringung der Förderleisten an den zugehörigen Kettengliedern der Förderkette zur Verfügung zu stellen, ist bevorzugt vorgesehen, daß bei den Kettengliedern mit Förderleiste mindestens eines der Kettengliedteile in Draufsicht eine Dreieck- oder Trapez-Grundform aufweist, dessen Basis an der Ketteninnenseite liegt.

In vielen Einsatzfällen von Kettenförderern ist es zweckmäßig, nicht an jedem Kettenglied eine Förderleiste vorzusehen, sondern die Förderleisten in einem gewissen Abstand voneinander anzuordnen. Um die Einstellung dieses Abstandes auf möglichst einfache Weise variabel gestalten zu können, sind bevorzugt zwischen den Kettengliedern mit Förderleiste weitere Kettenglieder mit in Draufsicht ovalen Kettengliedteilen angeordnet. Diese weiteren Kettenglieder sind herkömmliche Bauteile, die in ihrer bekannten Form unmittelbar verwendbar sind, so daß hierfür keine Sonderanfertigungen nötig sind.

Um die Abstützwirkung bei der Einleitung der Hebelkräfte von den Förderleisten in die Förderkette zu verbessern und insbesondere auf eine größere Länge der Kette zu verteilen, ist vorgesehen, daß zusätzlich zu den Kettengliedern mit Förderleiste und Stützfortsatz und zu den weiteren Kettengliedern mit ovalen Kettengliedteilen dritte Kettenglieder vorgesehen sind, die nur einen Stützfortsatz aufweisen.

Um mit den Stützfortsätzen bei einfacher Bauweise möglichst große Hebelkräfte übertragen zu können, umfaßt jeder Stützfortsatz vorzugsweise einen die Kettengliedteile quer miteinander verbindenden Steg. Dieser Steg ist bevorzugt ein Voll- oder Hohlprofil mit Vierkant-Querschnitt.

Eine besonders belastbare Förderkette mit einem für viele Anwendungsfälle günstigen Abstand der Förderleisten ergibt sich, wenn die Förderkette aus einer sich regelmäßig wiederholenden Folge von in Ketten-Arbeitsrichtung gesehen je einem Kettenglied mit Förderleiste und Stützfortsatz, je einem Kettenglied mit ovalen Kettengliedteilen und je einem Kettenglied nur mit Stützfortsatz zusammengesetzt ist.

Um die Förderleisten bei möglichst geringem Gewicht und niedrigen Materialkosten doch hoch belasten zu können, ist bevorzugt vorgesehen, daß die Förderleisten aus T- oder Winkel- oder Vierkant-Profilabschnitten aus Stahl bestehen und jeweils mit dem zugehörigen Kettenglied verschweißt sind. Die Höhe der Profilabschnitte wird vorzugsweise so gewählt, daß sie dem lichten Abstand der Kettengliedteile der Kettenglieder, an denen die Förderleisten anzubringen sind, entspricht. Dies erlaubt eine besonders stabile Verbindung zwischen Förderleisten und zugehörigen Kettengliedern.

Zur Vermeidung von jeglichen Bewegungkomponenten des zu fördernden Gutes in Richtung zur Förderkette ist schließlich noch vorgesehen, daß die Förderleisten mit der Arbeitsrichtung der Förderkette einen Winkel zwischen 95° und 120° bilden. Auf diese Weise wird dem zu fördernden Gut neben der Bewegungskomponente in Arbeitsrichtung der Förderkette zusätzlich eine kleine Bewegungskomponente in einer Richtung von der Förderkette weg gegeben, was dafür sorgt, daß die Förderkette saubergehalten wird und nicht durch eingetragenes Fördergut in ihrer Funktion behindert wird.

Ein Ausführungsbeispiel der Erfindung wird im folgenden anhand einer Zeichnung erläutert. Die Figuren der Zeichnung zeigen:
- Figur 1: einen Ausschnitt aus einem Kettenförderer in Draufsicht und
- Figur 2: einen Abschnitt der Förderkette des Kettenförderers in Seitenansicht.

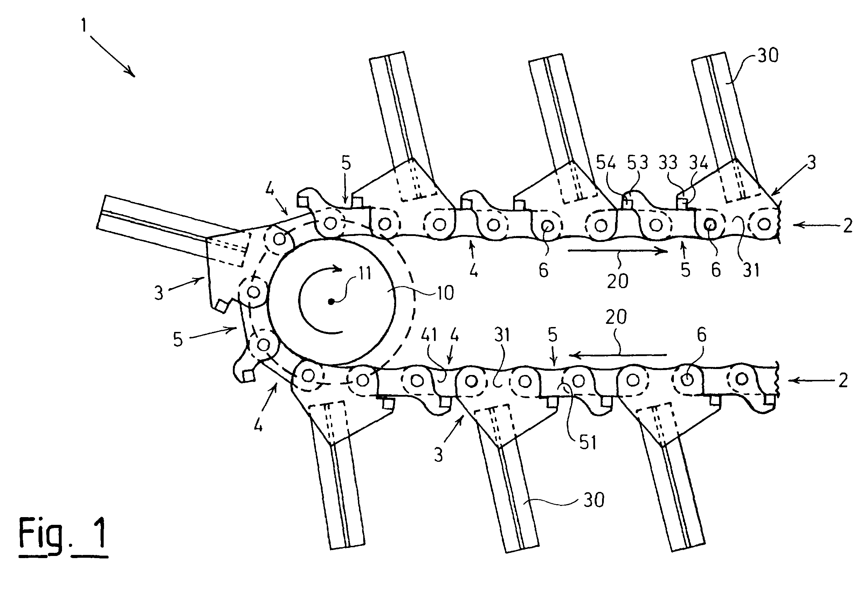

Bei dem in Figur 1 gezeigten Ausführungsbeispiel eines Kettenförderers 1 besteht dieser aus einer endlosen, zwischen zwei Förderrädern 10 umlaufenden Förderkette 2, wobei die Zeichnung nur eines der Förderräder 10 mit seiner senkrecht zur Zeichnungsebene verlaufenden Drehachse 11 zeigt. Von der Förderkette 2 ragen in regelmäßigen Abständen Förderleisten 30 nach außen, die zum Transport eines zu fördernden Gutes dienen. Die Arbeitsrichtung des Kettenförderers ist durch die Bewegungspfeile 20 dargestellt. Der Antrieb der Förderkette 2 erfolgt über wenigstens eines der beiden Förderräder 10, die als Ritzel ausgebildet sind und mit ihren nicht einzeln dargestellten, in ihrem Umfang durch einen gestrichelten Kreis angedeuteten Zähnen in die Förderkette 2 eingreifen. Der Kettenförderer 1 ist beispielsweise in Misch- und Verteilwagen für Futter einsetzbar.

Wie die Figur 1 weiter zeigt, setzt sich die Förderkette 2 aus einer Vielzahl von drei unterschiedlichen Kettengliedern 3, 4, 5 zusammen, die nach Art einer Rollenkette mittels Kettennieten 6 gelenkig miteinander verbunden sind. Jedes Kettenglied 3, 4, 5 setzt sich aus je zwei deckungsgleichen Kettengliedteilen zusammen, wobei in der Draufsicht gemäß Figur 1 jeweils nur der obere Kettengliedteil 31, 41, 51 sichtbar ist.

Die ersten Kettenglieder 3 besitzen in Draufsicht gesehen eine annähernd dreieckige Grundform, wobei die Basis des Dreiecks an der zum Förderrad 11 weisenden Ketteninnenseite liegt. Von der Spitze der Kettenglieder 3 erstreckt sich jeweils die Förderleiste 30 nach außen, wobei diese mit der Arbeitsrichtung 20 der Förderkette 2 im vorliegenden Beispiel einen Winkel von etwa 105° bildet. Hierdurch wird das zu fördernde Gut von der Förderkette 2 ferngehalten.

Jedes Kettenglied 3 besitzt einen entgegen der Ketten-Arbeitsrichtung 20 weisenden, bis etwa zur Mitte des jeweils nachfolgenden Kettengliedes 5 reichenden Stützfortsatz 33. Dieser Stützfortsatz 33 liegt jeweils in den geradlinig verlaufenden Kettenabschnitten am jeweils nachfolgenden Kettenglied 5 sich außenseitig abstützend an. Hierdurch werden Hebelkräfte von den mit dem zu fördernden Gut belasteten Förderleisten 30 auf jeweils zwei Kettenglieder 3, 5 verteilt, was die Belastung der einzelnen Kettenglieder 3 reduziert.

Zusätzlich haben auch die Kettenglieder 5 je einen vergleichbar ausgeführten Stützfortsatz 53, der sich ebenfalls entgegen der Ketten-Arbeitsrichtung 20 bis etwa zur Mitte des jeweils nachfolgenden Kettengliedes 4 erstreckt und sich an dessen Außenseite in den geradlinigen Förderkettenabschnitten abstützt. Auf diese Weise wird jeweils ein drittes Kettenglied für die Einleitung der Hebelkräfte von den Förderleisten 30 in die Förderkette 2 herangezogen. Die Kettenglieder 4 sind, wie bei üblichen Rollenketten, ovalförmig ausgeführt und weisen keinerlei Besonderheiten auf.

Um die Stützfortsätze 33, 53 möglichst einfach und zugleich hoch belastbar zu machen, umfaßt jeder Stützfortsatz 33, 53 je einen die zugehörigen Kettengliedteile quer miteinander verbindenden Steg 34, 54. Hierdurch werden die mit den Stegen 34, 54 ausgestatteten Kettenglieder 3, 5 in sich stabilisiert und es wird eine günstige Krafteinleitung von dem jeweiligen Kettenglied 3, 5 in das jeweils nachfolgende Kettenglied 5, 4 erzielt.

Die Förderleisten 30 sind im dargestellten Ausführungsbeispiel als T-Profile ausgeführt, die zwischen die beiden Kettengliedteile 31, 32 (letzteres nicht sichtbar) eingreifen und dort befestigt sind, beispielsweise durch Verschweißen.

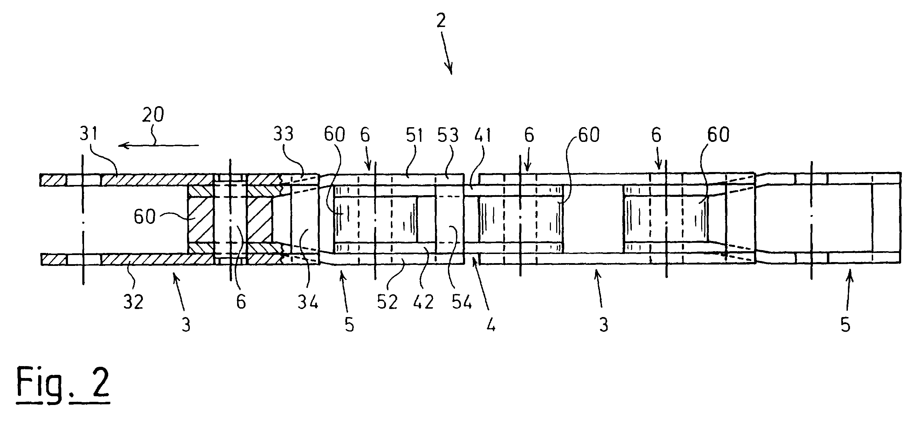

Figur 2 der Zeichnung zeigt in der Seitenansicht auf einen Abschnitt der Förderkette 2 besonders deutlich, daß jedes Kettenglied 3, 4, 5 aus je zwei flachen, plattenförmigen Kettengliedteilen 31 und 32, 41 und 42 sowie 51 und 52 besteht.

Die Kettenglieder 3 besitzen jeweils an ihrem rechten Ende, d.h. in Arbeitsrichtung 20 der Förderkette 2 gesehen hinten, jeweils den Stützfortsatz 33 mit dem quer verlaufenden Steg 34, der die beiden Kettengliedteile 31, 32 miteinander verbindet.

Zwischen die beiden Kettengliedteile 31, 32 ragt von rechts her der vordere Teil des nachfolgenden Kettengliedes 5, dessen Kettengliedteile 51, 52 in ihrem Verlauf gekröpft sind. In ihrem rechten, d.h. hinteren Teil liegen die Kettengliedteile 51, 52 des Kettengliedes 5 in einer gemeinsamen Ebene mit den Kettengliedteilen 31, 32.

Weiter nach rechts folgt auf das Kettenglied 5 das Kettenglied 4, das mit einer geringeren Höhe ausgeführt ist und das mit seinem linken, d.h. vorderen Teil zwischen den Kettengliedteilen 51, 52 des Kettengliedes 5 und mit seinem hinteren Teil zwischen den Kettengliedteilen 31, 32 des dahinter folgenden nächsten Kettengliedes 3 liegt.

Zur gelenkigen Verbindung der Kettenglieder 3, 4, 5 miteinander dienen die Kettenniete 6, die jeweils durch fluchtende Bohrungen in zwei benachbarten Kettengliedern verlaufen und um die herum jeweils eine hohlzylindrische Rolle 60 angeordnet ist. Mit diesen Rollen 60 treten die Förderräder gemäß Figur 1 in Eingriff, um die Förderkette 2 umzulenken und anzutreiben.

Die an den Kettengliedern 3 vorgesehenen Förderleisten 30 sind in der Figur 2 aus Übersichtlichkeitsgründen weggelassen; sie würden sich aus der Zeichnungsebene in Richtung zum Betrachter hin erstrecken.

## Patentansprüche

1. Kettenförderer (1) mit einer endlosen, zwischen zwei Förderrädern (10) umlaufenden Förderkette (2), die aus gelenkig miteinander verbundenen Kettengliedern (3, 4, 5) zusammengesetzt ist, wobei an einem Teil der Kettenglieder (3) in der Kettenumlaufebene von der Kette (2) nach außen weisende Förderleisten (30) vorgesehen sind,
**dadurch gekennzeichnet,**
daß jedes Kettenglied (3), an dem eine Förderleiste (30) vorgesehen ist, einen entgegen der Ketten-Arbeitsrichtung (20) weisenden, bis etwa zur Mitte des jeweils nachfolgenden Kettengliedes (4, 5) reichenden Stützfortsatz (33) aufweist, der in geradlinig verlaufenden Kettenabschnitten am jeweils nachfolgenden Kettenglied (4, 5) sich außenseitig abstützend anliegt.

2. Kettenförderer nach Anspruch 1, dadurch gekennzeichnet, daß die Förderkette (2) als Rollenkette mit je Kettenglied (3, 4, 5) zwei oder mehr plattenförmigen Kettengliedteilen (31, 32; 41, 42; 51, 52) ausgeführt ist und daß bei den Kettengliedern (3) mit Förderleiste (30) diese mit mindestens einem der zugehörigen Kettengliedteile (31, 32) einstückig oder fest verbunden ist.

3. Kettenförderer nach Anspruch 2, dadurch gekennzeichnet, daß bei den Kettengliedern (3) mit Förderleiste (30) mindestens eines der Kettengliedteile (31, 32) in Draufsicht eine Dreieck- oder Trapez-Grundform aufweist, dessen Basis an der Ketteninnenseite liegt.

4. Kettenförderer nach Anspruch 2 oder 3, dadurch gekennzeichnet, daß zwischen den Kettengliedern (3) mit Förderleiste (30) weitere Kettenglieder (4) mit in Draufsicht ovalen Kettengliedteilen (41, 42) angeordnet sind.

5. Kettenförderer nach Anspruch 4, dadurch gekennzeichnet, daß zusätzlich zu den Kettengliedern (3) mit Förderleiste (30) und Stützfortsatz (33) und zu den weiteren Kettengliedern (4) mit ovalen Kettengliedteilen (41, 42) dritte Kettenglieder (5) vorgesehen sind, die nur einen Stützfortsatz (53) aufweisen.

6. Kettenförderer nach einem der Ansprüche 2 bis 5, dadurch gekennzeichnet, daß der Stützfortsatz (33, 53) einen die Kettengliedteile (31, 32; 51, 52) quer miteinander verbindenden Steg (34, 54) umfaßt.

7. Kettenförderer nach Anspruch 6, dadurch gekennzeichnet, daß der Steg (34, 54) ein Voll- oder Hohlprofil mit Vierkant-Querschnitt ist.

8. Kettenförderer nach einem der Ansprüche 5 bis 7, dadurch gekennzeichnet, daß die Förderkette (2) aus einer sich regelmäßig wiederholenden Folge von in Ketten-Arbeitsrichtung (20) gesehen je einem Kettenglied (3) mit Förderleiste (30) und Stützfortsatz (33), je einem Kettenglied (4) mit ovalen Kettengliedteilen (41, 42) und je einem Kettenglied (5) nur mit Stützfortsatz (53) zusammengesetzt ist.

9. Kettenförderer nach einem der vorangehenden Ansprüche, dadurch gekennzeichnet, daß die Förderleisten (30) aus T- oder Winkel- oder Vierkant-Profilabschnitten aus Stahl bestehen und jeweils mit dem zugehörigen Kettenglied (3) verschweißt sind.

10. Kettenförderer nach einem der vorangehenden Ansprüche, dadurch gekennzeichnet, daß die Förderleisten (30) mit der Arbeitsrichtung (20) der Förderkette (2) einen Winkel zwischen 95° und 120° bilden.
